# EUROPEAN PATENT SPECIFICATION

(11) **EP 2 085 913 B1**
(45) Date of publication and mention of the grant of the patent: **29.08.2012**
(21) Application number: 09250219.4
(22) Date of filing: 28.01.2009
(51) Int. Cl.: G06K 17/00, G06K 7/00

(54) **Apparatus for communicating with RFID tag, apparatus for producing RFID labels and label image management system**
Vorrichtung zur Kommunikation mit RFID-Etikett, Vorrichtung zur Herstellung von RFID-Etiketten und Etikettenbildverwaltungssystem
Appareil de communication avec une étiquette RFID, appareil pour la fabrication d'étiquettes RFID et système de gestion d'images d'étiquettes

(30) Priority: 01.02.2008 JP 2008022528
(43) Date of publication of application: 05.08.2009
(73) Proprietor: Brother Kogyo Kabushiki Kaisha, Nagoya-shi, Aichi-ken 467-8561 (JP)
(72) Inventor: Ichikawa, Yasuhisa, Nagoya-shi, Aichi, 467-8561 (JP); Takeda, Michihiro, Nagoya-shi, Aichi, 467-8561 (JP)
(74) Representative: Smith, Samuel Leonard

(56) References cited:
- EP-A- 1 560 148
- EP-A- 1 801 733
- WO-A-01/52179
- JP-A- 2001 134 672
- US-A1- 2002 185 532

## Description

### TECHINICAL FIELD

The present invention relates to an apparatus for communicating with a RFID tag for radio communication with a RFID circuit element provided with an IC circuit part storing information and a tag antenna capable of transmission/reception of information, an apparatus for producing RFID label configured to produce a RFID label having the RFID circuit element, and a label image management system having the apparatus for communicating with a RFID tag and the apparatus for producing RFID label.

### BACKGROUND ART

Recently, a RFID (Radio Frequency Identification) system configured to carry out reading/writing of information contactlessly between a small-sized RFID tag having a RFID circuit element provided with an IC circuit part storing predetermined information and a tag antenna connected to the IC circuit part for information transmission/reception and a reader (reading device)/writer (writing device) has been proposed and put into practice in various fields.

The RFID systems which have been actively utilized in the various fields include an apparatus for communicating with a RFID tag configured to carry out reading of information via radio communication with respect to the RFID circuit element (See JP,A,2001-134672, for example). This apparatus for communicating with a RFID tag (apparatus for verifying printed matter) has display means (display portion) so that radio communication is carried out with the RFID circuit element (IC chip part) and if information is successfully gotten, display corresponding to the gotten information is made by the display means. US 2002/0185532 and WO 01/52179 describe similar, portable RFID readers having displays for displaying information relating to the RFID tags and EP-A-1 801 733 describes a tag-label producing device.

### DISCLOSURE OF THE INVENTION

### Problem to be solved by the Invention

Generally, if an article, which is a search target, is searched using an apparatus for communicating with a RFID tag, an operator needs to move to the vicinity of the target so that the target comes within a communication range of the apparatus for communicating with a RFID tag. Moreover, in the apparatus for communicating with a RFID tag, since information is gotten and the target is detected at a position separated from the target to some degree, final identification of the target after the detection should be made by the operator. At this time, with the apparatus for communicating with a RFID tag in the prior art, corresponding display is made by the display means when the information is successfully gotten from the RFID circuit element, but no display is made before the information is gotten. Thus, the operator needs to search the target with visual search or the like and move to the vicinity of the target. Moreover, even after the detection, if there is an article and the like with appearance resembling the target in the vicinity of the target, for example, there is a problem that the final identification of the target is not easy. '

An object of the present invention is to provide an apparatus for communicating with a RFID tag, an apparatus for producing RFID label, and a label image management system that facilitate identification of the target and can improve convenience. According to the present invention, these are provided as defined in appended claims 1, 6 and 8.

### BRIEF DESCRIPTION OF THE DRAWING

Fig. 1 is a system configuration diagram illustrating an entire configuration of a label image management system having an apparatus for communicating with a RFID tag of an embodiment.
Fig. 2 is a plan view illustrating an entire appearance of the apparatus for communicating with a RFID tag.
Fig. 3 is a system configuration diagram conceptually illustrating a functional configuration of an entire system of the label image management system.
Fig. 4 is a functional block diagram illustrating a functional configuration of a control circuit of the apparatus for communicating with a RFID tag.
Fig. 5 is a functional block diagram illustrating a functional configuration of a radio frequency circuit of the apparatus for communicating with a RFID tag.
Fig. 6 is a diagram illustrating an example of a functional configuration of a RFID circuit element.
Fig. 7 is a plan view illustrating an example of an appearance of a RFID label produced by an apparatus for producing RFID label.
Figs. 8A and 8B are diagrams illustrating an example of a case where label image display is not made before information acquisition is completed.
Figs. 9A and 9B are diagrams for illustrating a display operation at detection of a search target in the apparatus for communicating with a RFID tag in this embodiment.
Fig. 10 is a flowchart illustrating a control procedure executed by a control circuit of a PC when the RFID label is produced.
Fig. 11 is a flowchart illustrating a control procedure executed by a control circuit of the apparatus for producing RFID label when the RFID label is produced.
Fig. 12 is a diagram conceptually illustrating an example of data contents of a database after the RFID label is produced.
Fig. 13 is a diagram illustrating an example of a time chart of a signal transmitted/received between the apparatus for communicating with a RFID tag and the one RFID circuit element.
Fig. 14 is a flowchart illustrating a control procedure executed by a control circuit of the apparatus for communicating with a RFID tag when a search target is searched.
Fig. 15 is a flowchart illustrating another control procedure executed by a control circuit of the apparatus for communicating with a RFID tag when a search target is searched.
Fig. 16 is a flowchart illustrating a detailed procedure of a single search mode processing of Step S300.
Fig. 17 is a flowchart illustrating a detailed procedure of a multi search mode processing of Step S400.

### BEST MODE FOR CARRYING OUT THE INVENTION

An embodiment of the present invention will be described below referring to the attached drawings.

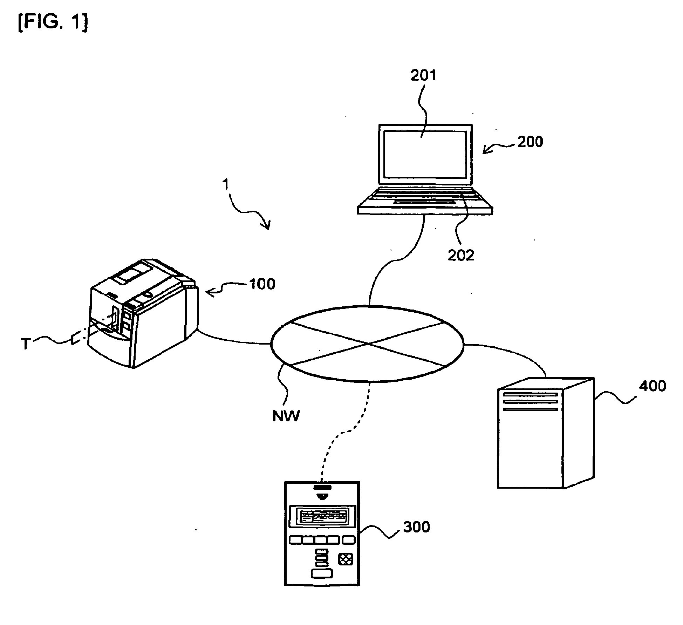

Fig. 1 is a system configuration diagram illustrating an entire configuration of a label image management system 1 having an apparatus 300 for communicating with a RFID tag of this embodiment.

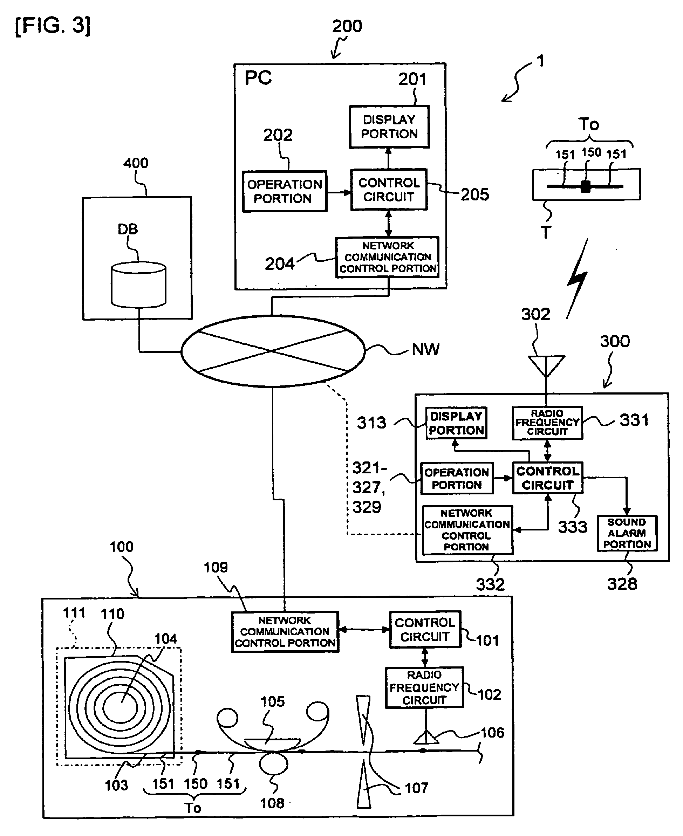

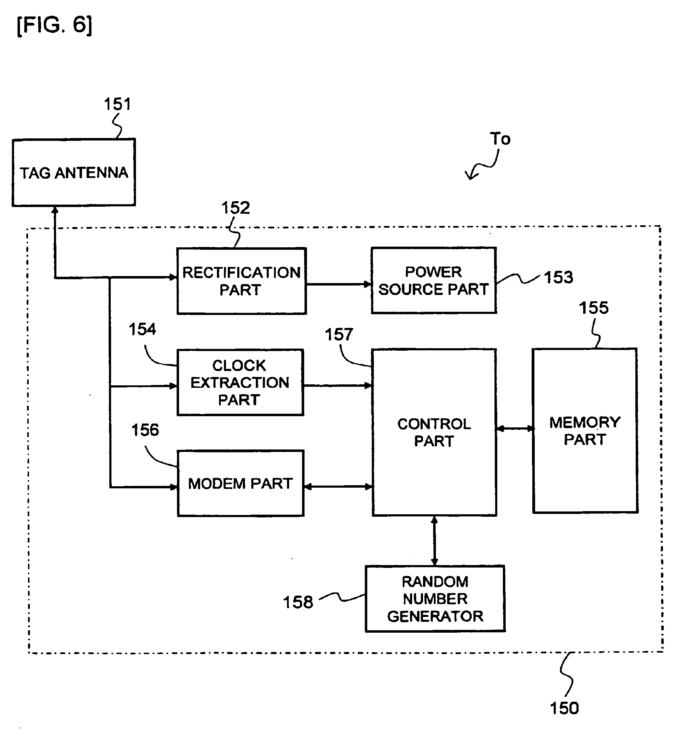

In Fig. 1, the label image management system 1 has an apparatus 100 for producing RFID tag configured to produce a RFID label T having a RFID circuit element To (See Fig. 6, which will be described later) provided with an IC circuit part 150 storing information and a tag antenna 151 connected thereto, a PC 200 connected to the apparatus 100 for producing RFID label via a wired or radio communication line NW and capable of editing print contents of the RFID label T to be produced, an apparatus 300 for communicating with a RFID tag similarly connected to the communication line NW via radio and having a function as a reader that reads out information from the RFID circuit element To of the RFID label T produced by the apparatus 100 for producing RFID label, and a server 400 similarly connected to the communication line NW and having a database DB in which information such as image data and the like of a plurality of templates Sx which can be fixedly available to an operator as a print mode of the RFID label T produced by the apparatus 100 for producing RFID label is stored capable of being read out. Since the apparatus 300 for communicating with a RFID tag and the communication line NW are connected via radio (wireless LAN or the like), they are shown by a dotted line in the figure (the same applies to Fig. 3, which will be described later).

The PC 200 (RFID label editing device) has a display portion 201 and an operation portion 202 so that the operator can input various commands or input information to the apparatus 300 for producing RFID label using the operation portion 202 while referring to a display screen displayed on the display portion 201.

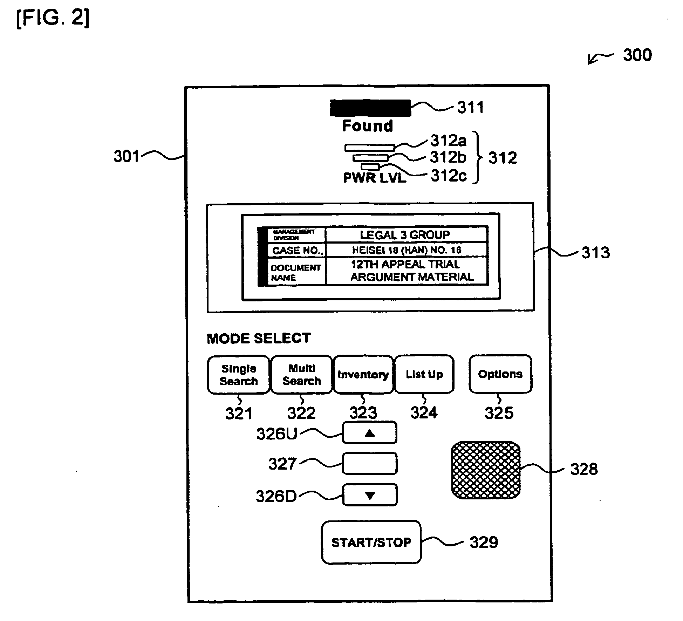

Fig. 2 is a plan view illustrating an entire appearance of the apparatus 300 for communicating with a RFID tag.

In Fig. 2, the apparatus 300 for communicating with a RFID tag has a housing 301 formed substantially in a cubic shape. On a face on one side of the housing 301 (face on the front shown in the figure), a detection lamp 311 and a transmission output indicator 312, a display portion 313 that makes various display (image display means, display means), mode selection keys 321, 322, 323, 324 and 325 arranged substantially in a straight state in the horizontal direction for mode selection out of five processing modes, directional keys 326U, 326D corresponding to up/down directions, respectively, a decision key 327 arranged between them, a sound alarm portion 328 arranged on the right side of these keys 326, 327, and a start/stop key 329 that starts/stops processing in each of the above processing modes from an upper side of the figure. Among these portions, the mode selection keys 321, 322, 323, 324 and 325, the two directional keys 326U, 326D, the decision key 327, and the start/stop key 329 constitute operating means to operate and input information that identifies at least one RFID circuit element described in each claim. These keys 321, 322, 323, 324, 325, 326U, 326D, 327 and 329 are described as "operation portion" below as appropriate.

The display portion 313 displays a switching state of various processing modes made by the apparatus 300 for communicating with a RFID tag and detailed contents (various information and message) in each processing mode in characters and symbols and in a predetermined processing mode (single search mode, multi search mode, which will be described later), it can graphically display an image such as label image data (including at least a part of print image data by a print head 105, which will be described later, and also may include an outer frame of the RFID label T produced as shown in Fig. 2. The same applies to the following) and the like of the RFID label T corresponding to an article and the like (including persons. The same applies to the following) to be searched and is constituted by a panel using a liquid crystal or an organic EL and the like, for example. In the illustrated example, label image data of the RFID label T provided on a document file, whose article name is "12^{th} appeal trial argument material" is displayed.

The above processing modes include a single search mode, a multi search mode, an inventory mode, a list-up mode, and an option mode corresponding to the mode selection keys 321, 322, 323, 324 and 325, respectively.

The single search mode is a processing mode in which one search target is specified, and communication is continued so as to ask all the time if the search target (RFID label T corresponding thereto. The same applies to the following) is present within a communicable range of the apparatus 300 for communicating with a RFID tag. The multi search mode is a processing mode in which a plurality of search targets is specified and communication is continued so as to ask all the time if the plurality of search targets is present within the communicable range of the apparatus 300 for communicating with a RFID tag.

The inventory mode is a processing mode in which trial is made only on whether the plurality of search targets specified in advance can be detected or not. Since only the presence matters in this mode, the processing is finished when all the plurality of specified search targets have been detected. The list-up mode is a processing mode in which radio communication is made with the search target present in the communicable range of the apparatus 300 for communicating with a RFID tag without specifying the search target, and all the detected search targets are listed up. Moreover, the option mode is a processing mode in which the operator sets various functions in the apparatus 300 for communicating with a RFID tag such as sound ON/OFF by the sound alarm portion 328, a vibrator function ON/OFF and the like.

The detection lamp 311 is a display function portion using a light-emitting element such as an LED and displays presence of detection of the search target specified by distinction between lighting/non-lighting. The transmission output indicator 312 is constituted by three LEDs 312a, 312b and 312c (light-emitting elements) aligned in the vertical direction in the figure and a magnitude of the transmission output is displayed in stages by the number of lighted elements (three stages in the illustrated example).

The two directional keys 326U, 326D arranged in the vertical direction, respectively, are key switches allocated so that the vertical direction can be instructed corresponding to the respective positional relations and are used for a movement instruction of a cursor displayed in the display portion 313 and a selection instruction of a plurality of options. The decision key 327 arranged at the center of the two directional keys 326U, 326D is used for a decision instruction of such selection.

The start/stop key 329 is a key switch used to instruct start (start of radio communication) and stop of transmission of various instruction commands and information to the RFID label T to be searched.

Fig. 3 is a system configuration diagram conceptually illustrating a functional configuration of an entire system of the label image management system 1. Arrows shown in the figure indicate an example of a flow of signals and do not limit the flow direction of the signals.

In Fig. 3, the apparatus 100 for producing RFID label is provided with a function to produce a RFID label as mentioned above. That is, the apparatus 100 for producing RFID label has a cartridge holder 111 to which a cartridge 110 provided with a roll 104 of a tape with RFID tags (actually it is in a spiral state but shown in a concentric circle for simplification) around which a tag tape 103 (tag medium) provided with RFID circuit elements To with a predetermined interval is wound can be detachably attached, the print head 105 (printing means) configured to apply a desired print on a region corresponding to each RFID circuit element To in the tag tape 103 fed out of the roll 104 of a tape with RFID tags in the cartridge 110, a feeding roller 108 (feeding means) configured to feed the tag tape 103, an apparatus antenna 106 and a radio frequency circuit 102 configured to carry out information transmission/reception via radio communication with the RFID circuit element To provided at the tag tape 103 and to write RFID tag information, a cutter 107 configured to cut the tag tape 103 for which print on the tag tape 103 and the information writing to the RFID circuit element To have been finished to a predetermined length to produce the above-mentioned RFID label T, a network communication control portion 109 configured to control communication made with the PC 200, the apparatus 300 for communicating with a RFID tag and the server 400 via the communication line NW, and a control circuit 101 configured to control an operation of the entire apparatus 100 for producing RFID label including the above radio frequency circuit 102, the print head 105, the cutter 107, the feeding roller 108, and the network communication control portion 109 and the like.

On the other hand, the PC 200 has the display portion 201 configured to display various operations/input screens and the like, the operation portion 202 provided with appropriate buttons, keys, mouse and the like for an operator to operate and input, a network communication control portion 204 configured to control communication with the apparatus 100 for producing RFID label, the apparatus 300 for communicating with a RFID tag, and the server 400 via the communication line NW, and a control circuit 205 configured to control an operation of the entire PC 200 including the display portion 201, the operation portion 202, and the network communication control portion 204.

The apparatus 300 for communicating with a RFID tag has the display portion 313, the operation portions 321 to 327, 329, a reader antenna 302 (radio communication means) configured to transmit/receive a signal with the RFID circuit element To via radio communication, a radio frequency circuit 331 configured to access the IC circuit part 150 of the RFID circuit element To through the reader antenna 302 via radio communication and to process a signal read out of the RFID circuit element To, a network communication control portion 332 configured to control communication with the apparatus 100 for producing RFID label, the PC 200, and the server 400 via the communication line NW, the sound alarm portion 328 configured to make an alarm by a sound effect and the like, a control circuit 333 configured to control the entire apparatus 300 for communicating with a RFID tag including the radio frequency circuit 331, the network communication control portion 332, and the sound alarm portion 328.

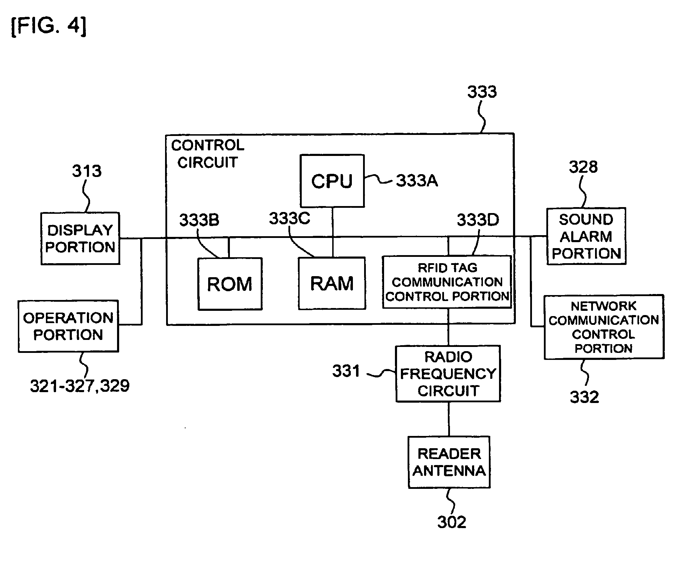

Fig. 4 is a functional block diagram illustrating a functional configuration of the control circuit 333 of the apparatus 300 for communicating with a RFID tag. Though not particularly shown, the control circuit 101 of the apparatus 100 for producing RFID label has a functional configuration substantially equivalent to that of the control circuit 333 shown here.

The control circuit 333 includes a CPU 333A, a ROM 333B, a RAM 333C, and a RFID tag communication control portion 333D configured to control radio communication with the RFID circuit element To via the radio frequency circuit 331 and the reader antenna 302. The CPU 333A carries out signal processing according to a program stored in the ROM 333B in advance while using a temporary storing function of the RAM 333C and thereby carries out various controls of the entire apparatus 300 for communicating with a RFID tag.

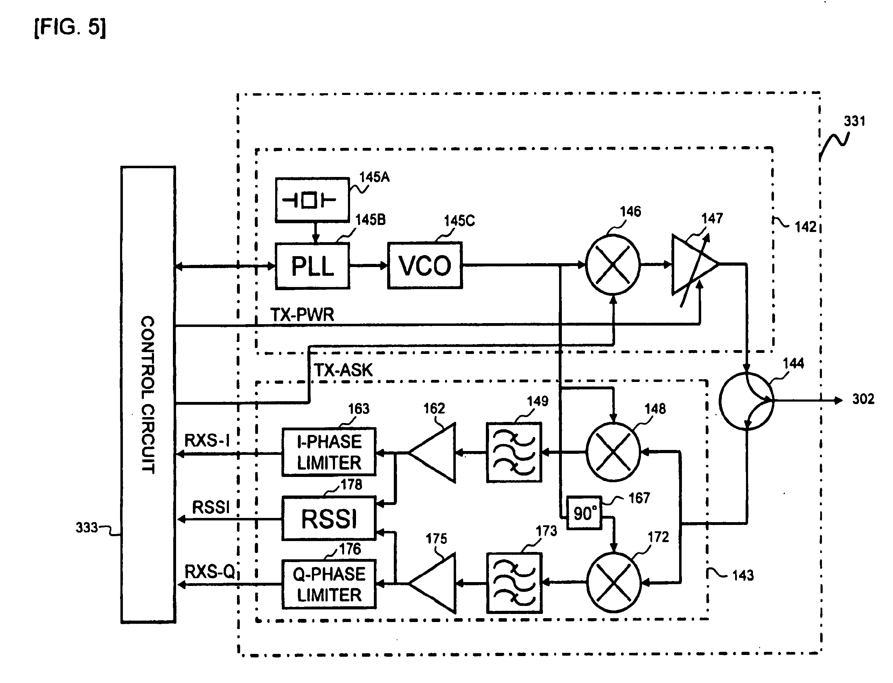

Fig. 5 is a functional block diagram illustrating a functional configuration of the radio frequency circuit 331 of the apparatus 300 for communicating with a RFID tag. The arrows shown in the figure indicate an example of a flow of signals and do not limit the flow direction of the signals.

In Fig. 5, the radio frequency circuit 331 accesses the information in the IC circuit part 150 of the RFID circuit element To via the reader antenna 302, reads out information by processing the signal read out of the IC circuit part 150 of the RFID circuit element To and generates various commands to access the IC circuit part 150 of the RFID circuit element To.

The radio frequency circuit 331 is constituted by a transmission portion 142 configured to transmit a signal to the RFID circuit element To via the reader antenna 302, a receiving portion 143 configured to receive a response wave from the RFID circuit element To received by the reader antenna 302, and a transmit-receive splitter 144.

The transmission portion 142 is a block that generates an interrogation wave to access the RFID tag information of the IC circuit part 150 of the RFID circuit element To. That is, the transmission portion 142 includes a crystal oscillator 145A configured to output a reference signal of a frequency, a PLL (Phase Locked Loop) 145B and a VCO (Voltage Controlled Oscillator) 145C that generate a carrier wave of a predetermined frequency by dividing/multiplying the output of the crystal oscillator 145A by control of the control circuit 333, a transmission multiplying circuit 146 (however, it may be replaced by an amplitude factor variable amplifier or the like in the case of amplitude modulation) that modulates (in this case, amplitude modulation based on the "TX_ASK" signal supplied from the control circuit 333) the carrier wave generated as above based on a signal supplied from the control circuit 333, and a variable transmission amplifier 147 that amplifies the modulated waves modulated by the transmission multiplying circuit 146 (with an amplification factor determined according to a "TX_PWR" signal from the control circuit 333 in this example) and generates a desired interrogation wave. In addition, the carrier wave generated as above uses a frequency of a UHF band, microwave band or shortwave band, for example, and the output from the variable transmission amplifier 147 is transmitted to the reader antenna 302 through the transmit-receive splitter 144 and is supplied to the IC circuit part 150 of the RFID circuit element To. Note that the interrogation wave is not limited to a signal modulated as above (modulated wave) but may be a mere carrier wave depending on the case.

The receiving portion 143 includes an I-phase receiving signal multiplying circuit 148 that multiplies and demodulates the response wave from the RFID circuit element To received at the reader antenna 302 by the carrier wave generated as described above, an I-phase bandpass filter 149 that extracts only the signals within a necessary band from the output of the I-phase receiving signal multiplying circuit 148, an I-phase receiving signal amplifier 162 that amplifies the output from the I-phase bandpass filter 149, an I-phase limiter 163 that further amplifies the output of the I-phase receiving signal amplifier 162 and converts it to a digital signal, a Q-phase receiving signal multiplying circuit 172 that multiplies the response wave from the RFID circuit element To received at the reader antenna 302 by the carrier wave whose phase is delayed by a phase shifter 167 by 90° after having been generated as described above, a Q-phase bandpass filter 173 that extracts only the signals within the necessary band from the output of the Q-phase receiving signal multiplying circuit 172, and a Q-phase receiving signal amplifier 175 that amplifies the output of the Q-phase bandpass filter 173, and a Q-phase limiter 176 that further amplifies the output of the Q-phase receiving signal amplifier 175 and converts it to a digital signal. A signal "RXS-I" output from the I-phase limiter 163 and a signal "RXS-Q" output from the Q-phase limiter 176 are input to the control circuit 333 for processing.

Also, the outputs from the I-phase receiving signal amplifier 162 and the Q-phase receiving signal amplifier 175 are input to an RSSI (Received Signal Strength Indicator) circuit 178 as intensity detection means and a signal "RSSI" indicating the intensity of these signals is input to the control circuit 333. As mentioned above, in the apparatus 300 for communicating with a RFID tag, demodulation of the response wave from the RFID circuit element To is performed by I-Q quadrature demodulation.

Fig. 6 is a diagram illustrating an example of a functional configuration of the RFID circuit element To. The arrows shown in the figure indicate an example of a flow of signals and do not limit the flow direction of the signals.

In Fig. 6, the RFID circuit element To has the tag antenna 151 configured to carry out transmission/reception of a signal contactlessly with the reader antenna 302 of the apparatus 300 for communicating with a RFID tag as mentioned above and the IC circuit part 150 connected to the tag antenna 151.

The IC circuit part 150 includes a rectification part 152 that rectifies an interrogation wave (interrogation signal) received by the tag antenna 151, a power source part 153 that accumulates energy of the interrogation wave rectified by the rectification part 152 so as to make it a driving power supply, a clock extraction part 154 that extracts a clock signal from the interrogation wave received by the tag antenna 151 so as to supply it to a control part 157, a memory part 155 capable of storing a predetermined information signal, a modem part 156 connected to the tag antenna 151, a random number generator 158 that generates a random number for determining to which identification slot the RFID circuit element To outputs a response signal when the interrogation signal from the reader antenna 302 is received, and the control part 157 that controls operation of the RFID circuit element To through the memory part 155, the clock extraction part 154, the random number generator 158, the modem part 156 and the like.

The modem part 156 demodulates a communication signal from the reader antenna 302 of the apparatus 300 for communicating with a RFID tag received by the tag antenna 151 and modulates a reply signal from the control part 157 and transmits it as a response wave (signal including a tag ID) from the tag antenna 151.

The clock extraction part 154 extracts a clock component from a received signal and extracts a clock to the control part 157 and supplies a clock corresponding to a frequency of the clock component of the received signal to the control part 157.

The random number generator 158 generates a random number from 0 to 2^{Q}-1 to a slot-number specification value Q specified to the interrogation signal from the reader antenna 302 of the apparatus 300 for communicating with a RFID tag. (The details will be described below.)

The control part 157 interprets a received signal demodulated by the modem part 156, generates a reply signal based on the information signal stored in the memory part 155, and executes basic control such as control of reply from the tag antenna 151 by the modem part 156 by an identification slot corresponding to the random number generated by the random number generator 158.

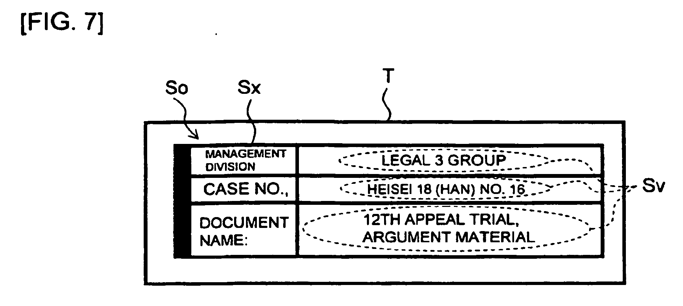

Fig. 7 is a plan view illustrating an example of an appearance of the RFID label T produced by the apparatus 100 for producing RFID label. The RFID label T corresponds to the label image data by the display portion 313 shown in the above-mentioned Fig. 2.

As shown in the figure, a print region So (print image data) of the RFID label T has the above template Sx, which is a template portion fixedly set in advance and a variable print region Sv, which is a text print portion other than that. In this example, the prints of the "LEGAL 3 GROUP", "HEISEI 18 (HAN) NO. 16", and "12TH APPEAL TRIAL ARGUMENT MATERIAL" input by the operator as text data constitute the variable print region Sv. In this way, only by the operator variably setting text information in the variable print region Sv, a desired print mode can be realized easily on the entire print region So.

One of the most distinctive features of the apparatus 300 for communicating with a RFID tag in this embodiment is that the label image data of the RFID label T corresponding to the RFID circuit element To is displayed on the display portion 313 before information acquisition is completed from the RFID circuit element To of a target from which information is to be gotten at a search. The details will be described below.

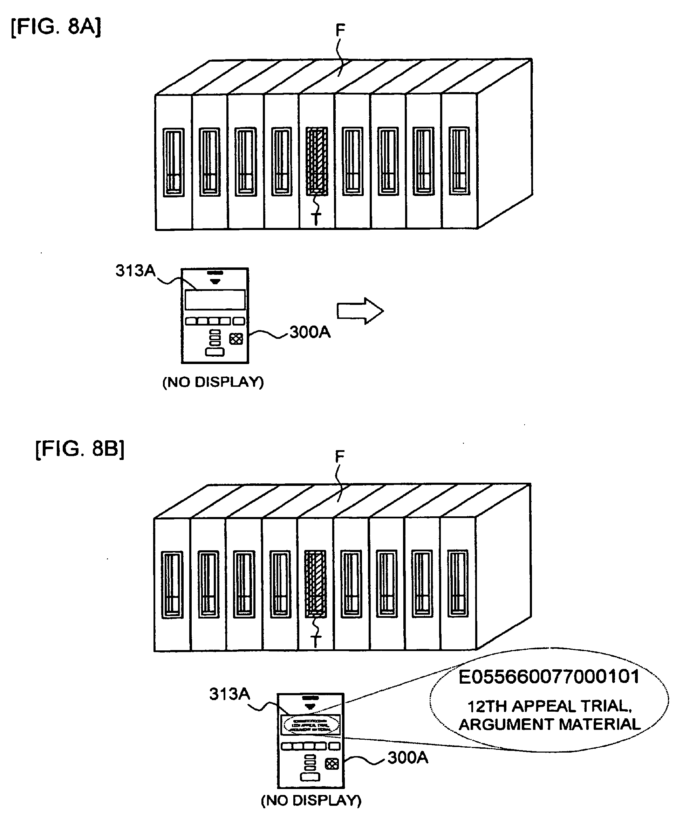

Figs. 8A and 8B show examples of a case in which the label image data is not displayed before completion of the information acquisition as above. The example in Fig. 8A is a case in which a document file name ("12TH APPEAL TRIAL ARGUMENT MATERIAL") to be searched is displayed when the RFID circuit element To to be searched is detected.

In this case, there is a following problem. Generally, when a document file F, which is a search target, is searched using the apparatus 300 for communicating with a RFID tag, the operator needs to move to the vicinity of the document file F so that the document file F comes within a communication range of the apparatus 300 for communicating with a RFID tag as shown in Figs. 8A and 8B. Moreover, if the search is made in this way, since detection is made at a position separated from the document file F to some degree as shown in Fig. 8B, the operator should make final identification of the document file F after the detection. Here, if any display is not made before detection as mentioned above, the operator needs to search the document file F with visual search or the like and to move to the vicinity thereof. Moreover, even after the detection, if there is a plurality of files with similar appearance in the vicinity of the document file F as shown in Figs. 8A and 8B, the final identification of the document file F is not easy.

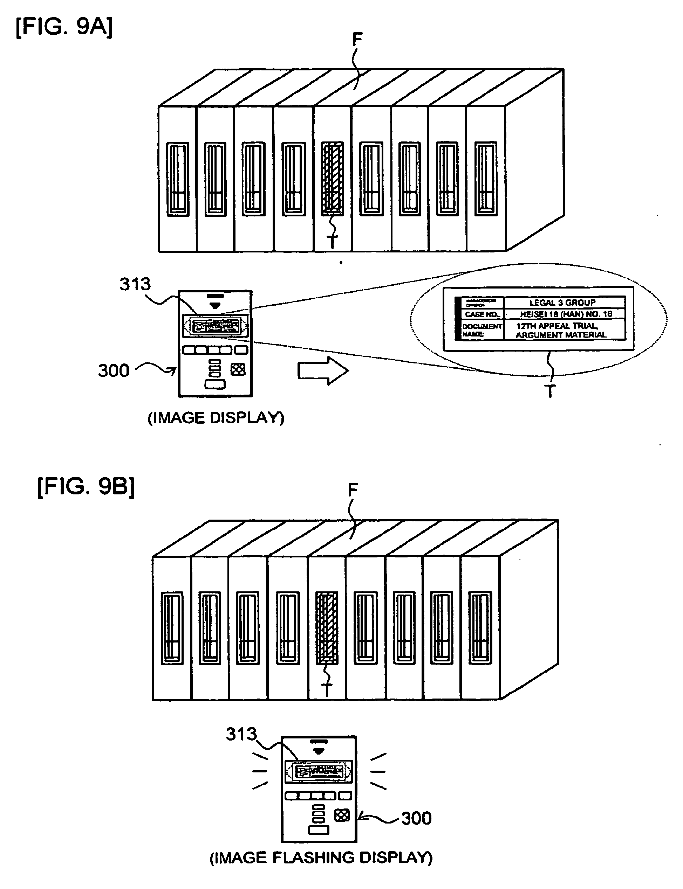

On the other hand, in this embodiment, as shown in Fig. 9A, even before the RFID circuit element To of the document file F to be searched is detected at the search, the label image data of the RFID label T provided at the document file F is displayed on the display portion 313. Then, as shown in Fig. 9B, when the RFID circuit element To to be searched is detected, the label image data of the RFID label T is flashingly displayed by the display portion 313. Thereby, the operator can search the document file F while visually recognizing the RFID label T corresponding to the document file F to be searched before it is found. As a result, as compared with the apparatus 300 for communicating with a RFID tag that does not display the label image data before completion of the information acquisition, the final identification of the document file F after movement to the vicinity of the document file F before detection and after the detection is facilitated. The details of the content will be described below.

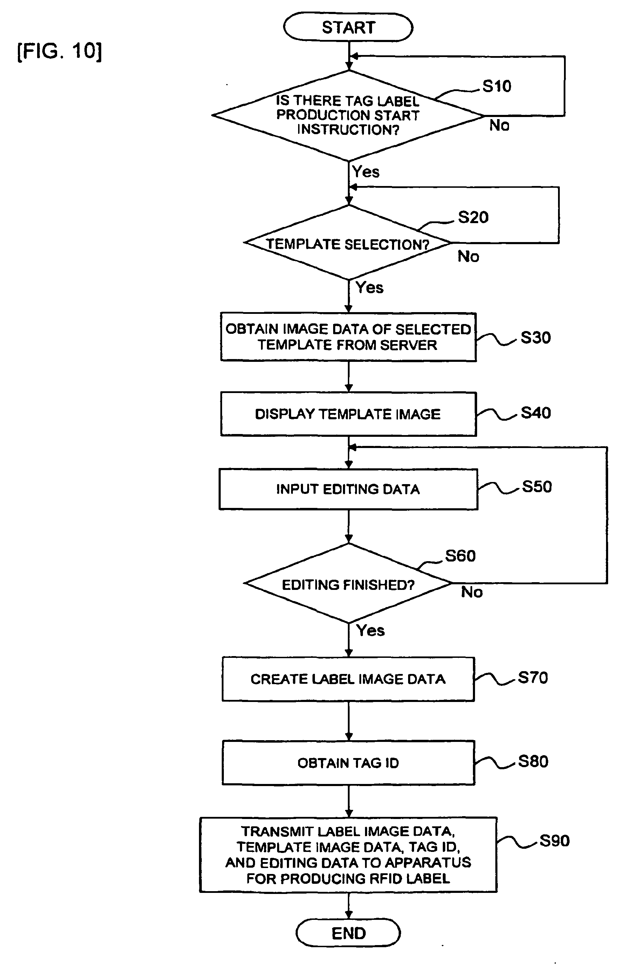

Fig. 10 is a flowchart illustrating a control procedure executed by the control circuit 205 of the PC 200 when the RFID label T is produced.

First, at Step S10, the control circuit 205 determines whether or not the operator has input a label production start command through the operation portion 202. This step is repeated till the label production start command is input, and if the label production start command is input, the routine goes to the subsequent Step S20.

At the subsequent Step S20, the control circuit 205 determines if the operator has selected the template Sx or not. Here, the template Sx is, as mentioned above in Fig. 7, a fixed print region fixedly set in advance in the print region So of the produced RFID label T so that the desired print mode can be easily realized on the entire print region So only by variably setting the print information by the operator in the variable print region Sv (text print portion) other than that. The image data of each template Sx is associated with a key word representing an application of the RFID label to be produced using the template Sx (for fixed assets management, for document management and the like, for example) and attribute (tape width, type of the RFID circuit element To and the like) and stored in the database DB in the server 400 in advance, and the operator can have a list of the corresponding template image data displayed by inputting the key word so that a desired template Sx can be selected from them. This step is repeated till the template Sx is selected and if selected, the routine goes to the subsequent Step S30.

At Step S30, the control circuit 205 obtains the image data of the template selected at Step S20 (bit map data and the like, for example) from the database DB of the server 400.

At Step S40, the control circuit 205 outputs a control signal to the display portion 201 to have the template image data obtained at Step S30 displayed on the display portion 201.

At Step S50, in the control circuit 205, the operator inputs editing data created by editing the text portion (variable print region Sv) other than the template using the operation portion 202 while referring to the template image data. This editing data includes an article name and the like to be used for the RFID label T to be produced.

At the subsequent Step S60, the control circuit 205 determines if the operator has finished the editing input or not. This determination is made by determining if the operator has input editing completion through the operation portion 102 or not, for example. If the editing input has not been finished, the routine returns to Step S50. On the other hand, if the editing input has been finished, the routine goes to the subsequent Step S70.

At Step S70, the control circuit 205 creates label image data of the RFID label T to be produced by adding the image data corresponding to the text portion (variable print region Sv) input at Step S50 and Step S60 to the template image data corresponding to the template Sx.

At the subsequent Step S80, the tag ID (identification information) to be written in the RFID circuit element To of the RFID label T to be produced is obtained from the database DB of the server 400. Incidentally, allocation of the tag ID to the RFID circuit element To of each RFID label T to be produced is carried out by the server 400.

At Step S90, correlation information correlating the label image data produced at Step S70, the template image data obtained at Step S30, the tag ID obtained at Step S80, and the editing (text) data input at Step S50 and Step S60 associated with each other is created and transmitted to the apparatus 100 for producing RFID label via the network communication control portion 204 and the communication line NW. Then, this flow is finished.

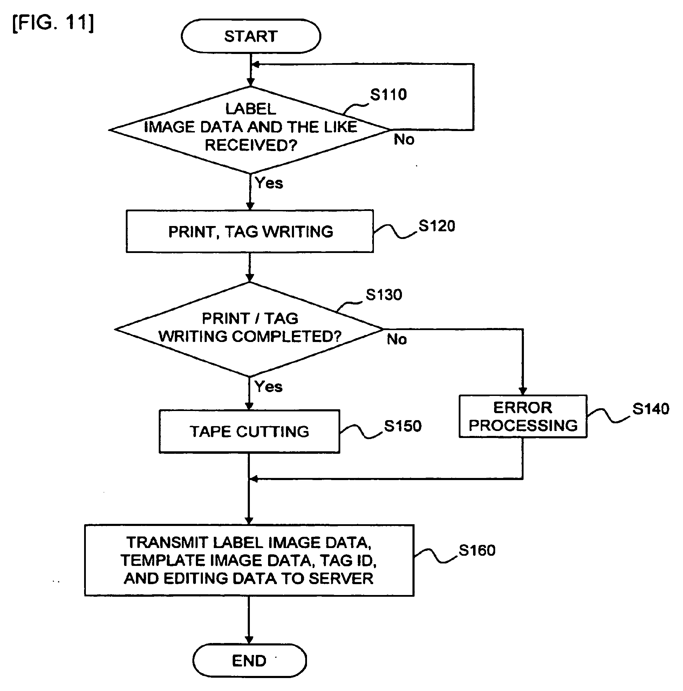

Note that the above flow does not limit the present invention to the procedure shown in the flow but is capable of addition, deletion or modification or the like within a range not departing from the gist and technical idea of the invention. For example, in the above, the correlation information is transmitted from the PC 200 only to the apparatus 100 for producing RFID label at Step S90 but the correlation information may be transmitted also to the database DB of the server 400 at the same time and stored and held. As a result, transmission of the correlation information from the apparatus 100 for producing RFID label to the database DB is not required any more (See Step S160 in Fig. 11, which will be described later). Step S90 in this case constitutes a second image data output means.

Fig. 11 is a flowchart illustrating a control procedure executed by the control circuit 101 of the apparatus 100 for producing RFID label when the RFID label T is produced.

First, at step S110, the control circuit 101 determines whether or not the label image data and the like (including template image data, tag ID, and text data) have been received or not from the (control circuit 205 of) PC 200 via the communication line NW and the network communication control portion 109. This step is repeated till the label image data and the like have been received from the PC 200 and when received, the routine goes to the subsequent Step S120.

At Step S120, the control circuit 101 applies the print on the desired print region So of the tag tape 103 by the print head 105 on the basis of the label image data (the label image data includes image data of the print by the print head 105) received from the PC 200 at Step S110. Also, the access information is created by the radio frequency circuit 102 and transmitted to the RFID circuit element To via the apparatus antenna 106, and the tag ID is written in the IC circuit part 150.

At the subsequent Step S130, the control circuit 101 determines if the print/information writing executed at Step S130 has been normally finished or not. The determination on whether the information writing has been normally finished or not, for example, is made specifically by creating access information according to a confirmation signal that confirms contents of the IC circuit part 150 of the RFID circuit element To by the radio frequency circuit 102, transmitting it to the RFID circuit element To via the apparatus antenna 106, and on the basis of a reply signal transmitted in response to that from the RFID circuit element To to be written in, determining if the writing of the tag ID has been normally completed or not. If the print/information writing has not been normally finished, the routine goes to Step S140. Then, the control circuit 101 transmits a control signal to the control circuit 205 of the PC 200 via the network communication control portion 109 and the communication line NW so as to execute error processing to have a display of that fact ("The print has not been normally finished", "Tag writing has not been normally finished" and the like, for example) displayed on the display portion 201. On the other hand, if the print/information writing has been normally finished, the routine goes to the subsequent Step S150.

At the subsequent Step S150, the control circuit 101 produces the RFID label T provided with the RFID circuit element To by having the tag tape 103 cut by the cutter 107.

At Step S160, the control circuit 101 creates correlation information correlating the label image data, the template image data, the tag ID and the editing (text) data of the produced RFID label T in association with each other and transmits the correlation information to the database DB of the server 400 via the network communication control portion 109 and the communication line NW to store and hold the information therein. Then, this flow is finished.

In the above, Step S160 constitutes first image data output means.

The above flow does not limit the present invention to the procedure shown in the flow but is capable of addition, deletion, modification or the like within a range not departing from the gist and technical idea of the invention. For example, in the above, the correlation information is transmitted from the apparatus 100 for producing RFID label to the database DB at Step S160, but not limited to that, since the PC 200 also has the correlation information of the same contents (See Step S90 in Fig. 10), it may be transmitted from the PC 200 to the database DB. Alternatively, the data may be divided and transmitted to the database DB such as the tag ID from the apparatus 100 for producing RFID label and the image data and the editing data from the PC 200, for example.

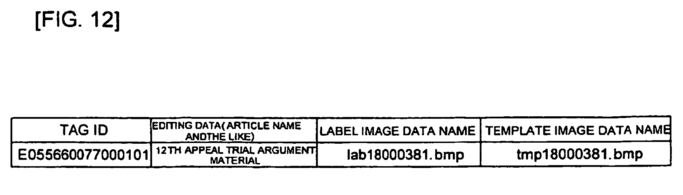

Fig. 12 is a diagram conceptually illustrating an example of the data contents of the database DB after the RFID label has been produced as above.

As shown in the figure, with respect to the produced RFID label T, a correlation information correlating the tag ID written in the RFID circuit element To, the editing (text) data made of article name (in this example, the document name "12^{th} appeal trial argument material") and the like, label image data (in this example, bit map data) and the template image data (in this example, bit map data) is stored and held in the database DB.

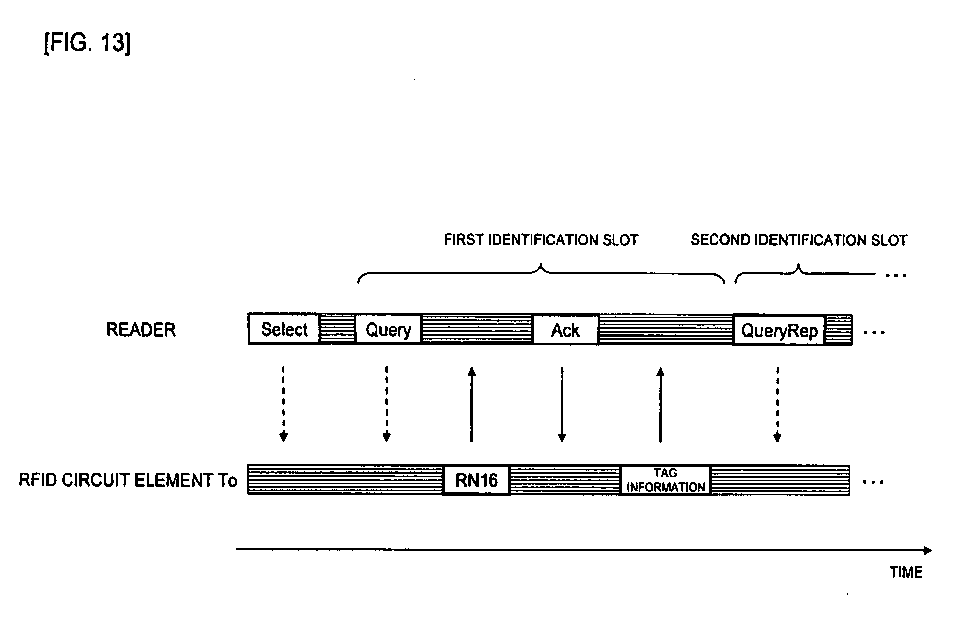

Subsequently, a signal transmitted/received between the apparatus 300 for communicating with a RFID tag and the RFID circuit element To and its method of transmission/reception will be described using a protocol of the international standard ISO/IEC18000-6 Type C as an example. Fig. 13 is a diagram illustrating an example of a time chart of a signal transmitted/received between the apparatus 300 for communicating with a RFID tag and the RFID circuit element To. The signal transmitting/receiving method shown in Fig. 13 is based on the known Slotted Random method, a time series change is shown from the left side to the right side in the figure. Arrows illustrated between the apparatus 300 for communicating with a RFID tag and the RFID circuit element To indicate a transmission direction of a signal, in which it is shown by a broken line if the opposite party of the transmission is unidentified, while it is shown by a solid line if the opposite party is identified.

In Fig. 13, the apparatus 300 for communicating with a RFID tag first transmits a "Select" command to all the RFID circuit elements To present in the communicable region. The "Select" command is a command to specify a condition of the RFID circuit element To with which the apparatus 300 for communicating with a RFID tag carries out radio communication after that and limits the number of RFID circuit elements To from which information is to be read out by specifying various conditions so as to improve efficiency of the radio communication. Then, only the RFID circuit element To satisfying the specified condition among the RFID circuit elements To having received the "Select" command is brought into a state capable of the radio communication after that (only one RFID circuit element To satisfying the condition is shown in the figure).

Subsequently, the apparatus 300 for communicating with a RFID tag transmits a "Query" command (readout command) that demands response and transmission of the respective tag information (including the tag ID as identification information) to the same RFID tag group. This "Query" command is a search command for making a search under a condition in which the number of RFID circuit elements To expected to respond is not certain. This "Query" command includes a slot number specifying value Q that specifies a predetermined number (any value from 0 to 15, for example, in this example). When the "Query" command is transmitted from the radio frequency circuit 331 via the reader antenna 302, each RFID circuit element To generates random numbers from 0 to 2^{Q}-1 (=2 to the power of Q - 1) by the random number generator 158 and holds them as a slot count value S.

Then, after the apparatus 300 for communicating with a RFID tag transmits the "Query" command via the reader antenna 302, a response from the RFID circuit element To is awaited at a predetermined identification slot. The identification slot is a time frame sorted out by a predetermined period from the "Query" command or a "QueryRep" command, which will be described later, is transmitted first. The identification slot is usually repeated continuously for a predetermined times (one time of the first identification slot of the "Query" command and the 2^{Q}-1 times of the second and subsequent identification slots of the "QueryRep" command, totaling in 2^{Q} times).

Then, the RFID circuit element To which generated the value zero as the slot count value S as in the example shown in the figure responds in the first identification slot including the "Query" command. At this time, the RFID circuit element To transmits a "RN16" command using a pseudo random number of 16 bits, for example, for obtaining permission to transmit the tag information as a response signal to the apparatus 300 for communicating with a RFID tag.

Then, the apparatus 300 for communicating with a RFID tag having received the "RN16" command transmits an "Ack" command allowing the transmission of the tag information with the contents corresponding to the "RN16" command. When the RFID circuit element To having received the "Ack" command determines that the "RN16" command previously transmitted by itself corresponds to the received "Ack" command, it regards that the individual RFID circuit element To is allowed to transmit the tag information and transmits the tag information (including the tag ID). In this way, the signal is transmitted/received in one identification slot.

After that, in the second and subsequent identification slots, the apparatus 300 for communicating with a RFID tag transmits the "QueryRep" command instead of the "Query" command and waits for the response of the other RFID circuit elements To (not particularly shown) in an identification slot time frame provided immediately after that. The RFID circuit element To having received the "QueryRep" command subtracts the value of its own slot count value S only by one and holds it and carries out signal transmission/reception including the "RN16" command in the identification slot at the time when the slot count value S becomes the value 0 with the apparatus 300 for communicating with a RFID tag.

Incidentally, if there is no applicable RFID circuit element To in each identification slot (the element with the slot count value S of zero in the identification slot), the identification slot is finished in the predetermined time frame without transmission/reception other than the "Query" command or the "QueryRep" command.

As mentioned above, by returning a response signal by each RFID circuit element To in a different identification slot, the apparatus 300 for communicating with a RFID tag can clearly receive and take in the tag information of the respective RFID circuit element To via the reader antenna 302 without being subjected to cross-talk. Then, a processing unit from the transmission of the "Select" command to the first identification slot (one time) starting with transmission of the "Query" command and repetition of the identification slot starting with the transmission of the "QueryRep" command in the following second and subsequent identification slots for a predetermined number of times (usually 2^{Q} -1 times) is called readout trial processing (the number of the identification slots is usually 2^{Q} in total). Also, the number of times that the apparatus 300 for communicating with a RFID tag carries out this readout trial processing is called readout trial number of times.

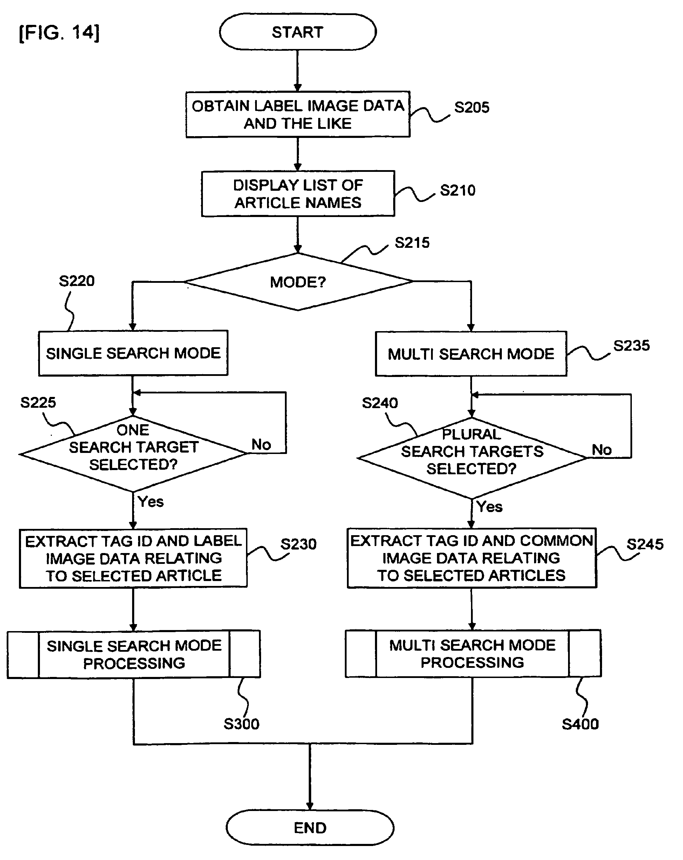

Fig. 14 is a flowchart illustrating a control procedure executed by the control circuit 333 of the apparatus 300 for communicating with a RFID tag when a search target is searched.

First, at Step S205, the control circuit 333 accesses the database DB of the server 400 via the communication line NW and gets all (or may be a part of ) the above information (including tag ID, editing data, label image data and template image data, constituting image related information in the case) relating to the RFID label T stored in the database DB. The data is temporarily stored in the RAM 333C provided at the control circuit 333.

At the subsequent Step S210, the control circuit 333 outputs a control signal to the display portion 313 to have a list of the article names displayed on the basis of the article name information included in the editing data of the above gotten data. Here, the list of the article names is displayed but not limited to that, a list of the tag IDs may be displayed or a list of images of label image data and the like may be displayed.

At the subsequent Step S215, the control circuit 333 determines if the processing mode is the above single search mode or the above multi search mode. If the operator selected the single search mode using the mode selection key 321, the routine goes to the subsequent Step S220 and shifts to the single search mode and at the subsequent Step S225, it is determined whether or not the operator has selected one article name to be searched using the operation portions 326, 327 in the list of article names displayed at Step S210. This step is repeated till one article is selected, and if selected, the routine goes to the subsequent Step S230.

Note that in the above, the operator selects and inputs the article name from the list of article names but not limited to that, if the list of tag IDs or images is displayed as mentioned above, for example, the desired tag ID or image may be selected and input from the list. If there are a large number of article name lists, the operator may be able to input a search condition for search in order to make efficient search.

At Step S230, the control circuit 333 extracts and obtains the tag ID and label image data (stored in the RAM 333C) relating to the article selected at Step S225 from the information obtained at the above-described Step 205.

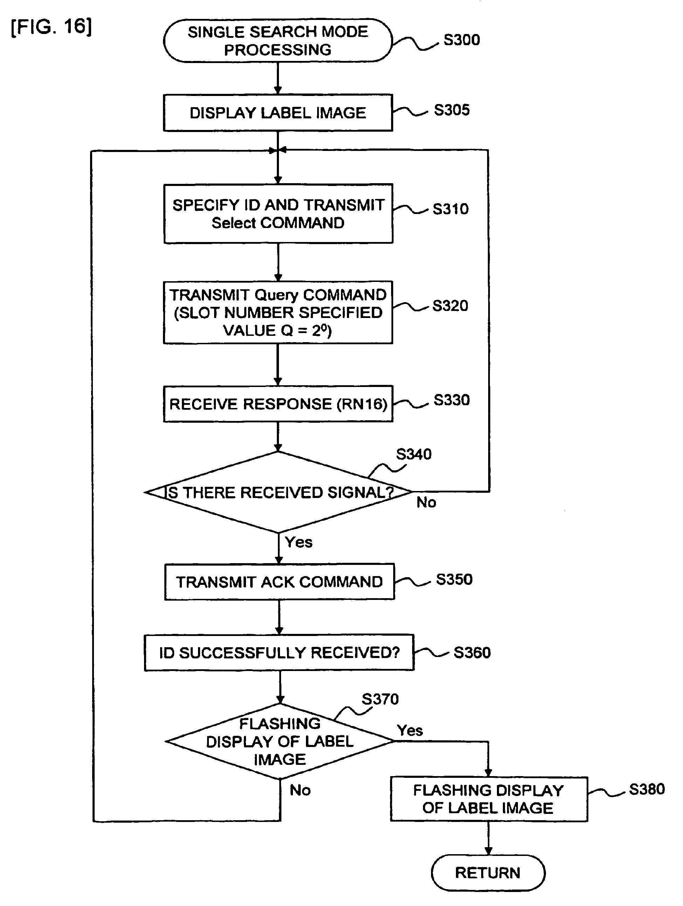

At the subsequent Step S300, the single search mode processing that searches a single article (for detailed procedure, see Fig. 16, which will be described later). Then, this flow is finished.

On the other hand, if the operator selected the multi search mode using the mode selection key 322 at Step S215, the routine goes to the subsequent Step S235 and shifts to the multi search mode and at the subsequent Step S240, it is determined whether or not the operator has selected a plurality of articles to be searched using the operation portions 326, 327 from the article name list displayed at Step S210. This step is repeated till the plurality of articles is selected, and if selected, the routine goes to the subsequent Step S245.

At Step S245, the control circuit 333 extracts and obtains the tag ID and common image data (stored in the RAM 333C) relating to the plurality of articles selected at Step S240. Here, the common image data is image data of a portion common to the plurality of label image data relating to the selected plural tag IDs and if the template Sx is common in the plurality of label image data and only the variable print region Sv portion is different, for example, the common image data is the template image data. If there is a common portion other than the template Sx (a part of the text data is common and the like, for example), the common image data includes the image data of the common portion in addition to the template image data.

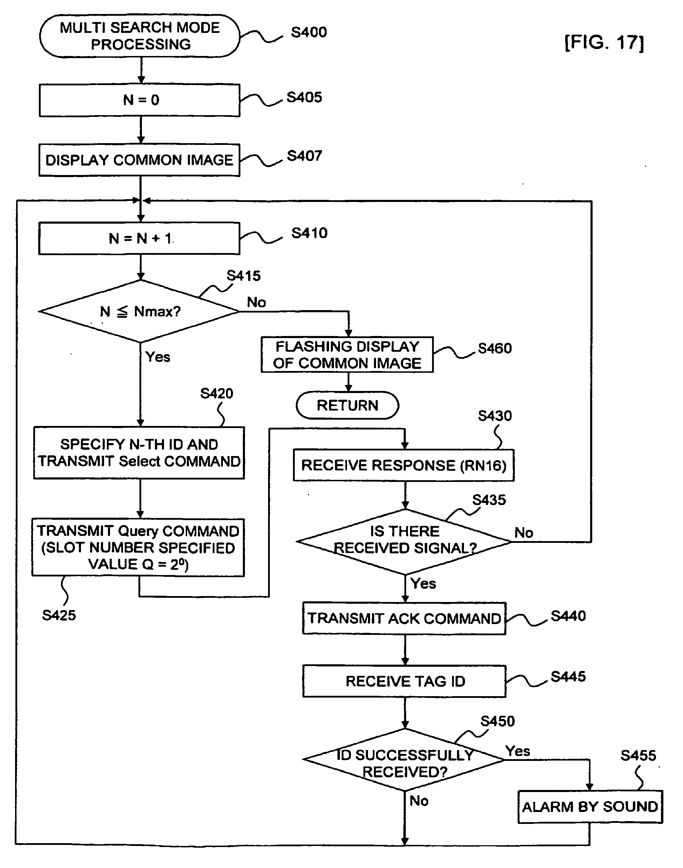

At the subsequent Step S400, the multi search mode processing that searches the plurality of articles (for detailed procedure, see Fig. 17, which will be described later) is carried out. Then, this flow is finished.

In the above, Step S205 constitutes image related information acquisition means described in each claim.

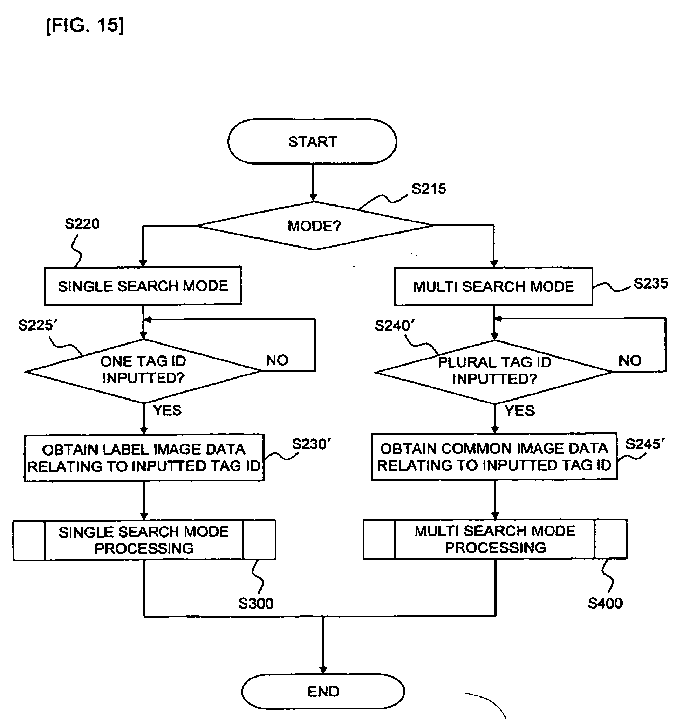

Note that the above flowchart does not limit the present invention to the procedure shown in the flow but is capable of addition, deletion, modification or the like within a range not departing from the gist and technical idea of the invention. For example, in the above, the image data relating to all the RFID labels are also downloaded to the apparatus 300 for communicating with a RFID tag from the database DB at Step S205, but not limited to that. For example, only the correlation (or a part of that, constituting image related information in this case) correlating tag ID and the corresponding image data is downloaded at Step S205 and a name or storage address of the image data of the RFID label T corresponding to the tag ID is obtained by using the correlation when the target is selected at the above-described Step 225 or Step 240 and the image data is obtained from the database DB. In this way, a capacity of storage means (RAM and the like) provided at the apparatus 300 for communicating with a RFID tag can be saved. Further, in case that tag ID of the target is recognized beforehand, the Steps S205 and S210 can be canceled as shown in Fig. 15. Tag ID is directly inputted by an operation at Steps S225' and S240' replacing with Steps S225 and S240, then the access to database DB is practiced at Steps S230' and S245' replacing with Steps S230 and S245 by using the tag ID as a key inputted at Steps S225' and S240'. Thus, the corresponding image data (constituting image related information in this case) is obtained on the basis of the above-described correlation in the database DB.

Fig. 16 is a flowchart illustrating a detailed procedure of the single search mode processing of Step S300.

First, at Step S305, the control circuit 333 outputs a control signal to the display portion 313 and has the label image data obtained at Step S230 displayed. As a result, the label image data of the RFID label T provided at an article and the like to be searched is displayed on the display portion 313. The image display at this time is lighting display.

First, at Step S310, the control circuit 333 transmits the "Select" command signal by specifying one tag ID obtained at Step S230 via the radio frequency circuit 331 and the reader antenna 302.

At the subsequent Step S320, the control circuit 333 transmits the "Query" command signal similarly to the above "Select" command signal. At this time, the slot number specifying value Q is specified at 2⁰ (=1).

At the subsequent Step S330, the control circuit 333 receives a response signal from the RFID circuit element To only for a predetermined time via the reader antenna 302 and the radio frequency circuit 331. After that, at Step S340, the control circuit 333 determines if the "RN16" command has been received or not as a response signal during the receiving time. In this determination, if the "RN16" command has not been received, the determination is not satisfied, that is, it is regarded that there is no responding RFID circuit element To in the identification slot (the first identification slot here), and the routine returns to Step S310. On the other hand, if the "RN16" command has been received, the determination is satisfied, that is, it is regarded that there is a responding RFID circuit element To in the identification slot (the first identification slot), and the routine goes to the subsequent Step S350.

At Step S350, the control circuit 333 transmits the "Ack" command with the contents corresponding to the pseudo random number included in the "RN16" command received at Step S330 via the radio frequency circuit 331 and the reader antenna 302. After that at Step S360, the control circuit 333 receives the tag information from the RFID circuit element To via the reader antenna 302 and the radio frequency circuit 331. After that, at Step S370, the control circuit 333 determines if the tag ID is included in the received tag information or not (in other words, the tag ID was successfully received or not). If the tag ID is not included, the determination is not satisfied but the routine returns to the previous Step S310. On the other hand, if the tag ID is included, the determination is satisfied and the routine goes to Step S380.

At Step S380, the control circuit 333 outputs a control signal to the display portion 313 and has the label image data displayed at Step S305 displayed in a flashing manner. Then, this routine is finished.

In the above, Steps S310-S360 constitute tag information acquisition means. Step S320 constitutes inquiry signal transmission means that transmits an inquiry signal demanding a response to the specified RFID circuit element via the radio communication means and Step S330 constitutes response signal receiving means that receives the response signal from the RFID circuit element corresponding to the inquiry signal via the radio communication means. Moreover, Step S305 and Step S380 constitute display control means.

The above flowchart does not limit the present invention to the procedure shown in the flow but is capable of addition, deletion, modification or the like of the procedure within a range not departing from the gist and technical idea of the invention. For example, at Step S380, together with the flashing display of the label image data by the display portion 313, an alarm may be made by the sound alarm portion 455. Moreover, at Step S380, the flashing display is made as a change of the display mode in the above, but other than that, any display may be made such that a display color is changed and highlighted, display size is changed or the image is animated, for example.

Fig. 17 is a flowchart illustrating a detailed procedure of the multi search mode processing at Step S400.

First, at Step S405, the control circuit 333 resets a value of a variable N for counting a plurality of tag IDs included in the list to zero.

At the subsequent Step S407, the control circuit 333 outputs a control signal to the display portion 313 so as to have the common image corresponding to the common image data obtained at Step S245 displayed. As a result, the common image data common to the plurality of RFID labels T provided at each of the plurality of articles and the like to be searched is displayed on the display portion 313. The image here is displayed in the lighting manner.

At Step S410, the control circuit 333 adds one to the value of the variable N and then, determines whether or not the value of this variable N is Nmax (the number of tag IDs to be searched) or less, that is, whether or not the search of the last tag ID among the plurality of tag IDs has been finished at Step S415. If the value of the variable N is larger than Nmax, it is regarded that all the tag IDs have been searched, the routine goes to Step S460, and the control circuit 333 outputs a control signal to the display portion 313 so as to have the common image data displayed at Step S407 displayed in the flashing manner. Then, this routine is finished. On the other hand, if the value of the variable N is Nmax or less, it is regarded that the search processing of all the tag IDs has not been finished, and the routine goes to the subsequent Step S420.

At Step S420, the control circuit 333 transmits the "Select" command signal by specifying the tag ID to the N-th RFID circuit element To via the radio frequency circuit 331 and the reader antenna 302.

At the subsequent Step S425, the control circuit 333 transmits the "Query" command signal similarly to the "Select" command signal. At this time the slot number specifying value Q is specified at 2⁰ (=1).

At the subsequent Step S430, the control circuit 333 receives a response signal from the RFID circuit element To only for a predetermined time via the reader antenna 302 and the radio frequency circuit 331. After that, at Step S435, the control circuit 333 determines if the "RN16" command has been received or not as a response signal during the receiving time. In this determination, if the "RN16" command has not been received, it is regarded that there is no responding RFID circuit element To in the identification slot (the first identification slot here), and the routine returns to Step S410. On the other hand, if the "RN16" command has been received, it is regarded that there is a responding RFID circuit element To in the identification slot (the first identification slot), and the routine goes to the subsequent Step S440.

At Step S440, the control circuit 333 transmits the "Ack" command with the contents corresponding to the pseudo random number included in the "RN16" command received at Step S430 via the radio frequency circuit 331 and the reader antenna 302. After that at Step S445, the control circuit 333 receives the tag information from the RFID circuit element To via the reader antenna 302 and the radio frequency circuit 331. After that, at Step S450, the control circuit 333 determines if the tag ID is included in the received tag information or not (in other words, the tag ID was successfully received or not). If the tag ID is not included, the determination is not satisfied but the routine returns to the previous Step S407. On the other hand, if the tag ID is included, the determination is satisfied and the routine goes to Step S455.

At Step S455, the control circuit 333 transmits a control signal to the sound alarm portion 328 so as to notify that the tag ID to be searched has been detected by sound effect and the like. Then, the routine returns to the previous Step S410.

In the above, Steps S420-S445 constitute tag information acquisition means that specifies identification information of at least one RFID circuit element and gets the information from the RFID circuit element via the radio communication means. Step S425 constitutes inquiry signal transmission means that transmits an inquiry signal demanding a response to the specified RFID circuit element via the radio communication means and Step S430 constitutes response signal receiving means that receives the response signal from the RFID circuit element corresponding to the inquiry signal via the radio communication means. Moreover, Step S407 and Step S460 constitute display control means.

The above flowchart does not limit the present invention to the procedure shown in the flow but is capable of addition, deletion, modification or the like of the procedure within a range not departing from the gist and technical idea of the invention. For example, at Step S455, not only the alarm by the sound alarm portion 455 but alarm by means of some display may be made by the display portion 313, or at Step S460, the alarm may be made by the sound alarm portion 455 together with the flashing display of the common image data. Moreover, at Step S460, flashing display is made as a change of the display mode in the above, but other than that, the display may be such that the display color is changed and highlighted, the size of the display is changed or image data is operated.

In the apparatus 300 for communicating with a RFID tag of this embodiment described above, by the radio communication via the reader antenna 302, the information is read out of the RFID circuit element To of the RFID label T provided at an article and the like to be searched. At the search, the control circuit 333 of the apparatus 300 for communicating with a RFID tag specifies the tag ID of the RFID circuit element To as a target and gets information from the above specified RFID circuit element To via the reader antenna 302. At this time, before the control circuit 333 completes information acquisition, the label image data of the RFID label T corresponding to the RFID circuit element To from which the information is to be gotten is displayed by the display portion 313. Thereby, the operator can search the target while visually recognizing the RFID label corresponding to the target to be searched before it is found. As a result, identification of the target is facilitated and convenience can be improved.

Also, particularly in this embodiment, the apparatus 300 for communicating with a RFID tag has the display portion 313 capable of graphic display. Thereby, since vivid graphic display can be made by the display portion 313, the operator can recognize the label image data more assuredly.

Also, particularly in this embodiment, when the RFID label T is produced by the apparatus 100 for producing RFID label, the templates Sx fixedly available to producers according to the usage and attribute of the label are prepared. In this case, a producer selects the prepared template Sx and then, variably sets the desired print information to the region other than the template Sx for printing. In this embodiment, in response to that, the label image data including the template image data of the above template Sx is displayed on the display portion 313. As a result, the label image data including so-called the template portion can be surely recognized by the operator.

Also, particularly in this embodiment, if the operator operates and inputs information to identify a plurality of the RFID circuit elements To with an intention to search a plurality of search targets by selecting the multi search mode, there is a good possibility that usages, attributes and the like of the plurality of targets have common points. In this case, the respective label image data of the corresponding plurality of RFID labels T include the template image data set according to the usage and attribute, and as a result, a common portion is present. Corresponding to that, in this embodiment, all the label image data are not displayed individually in this case but only the common image data including the template image data, which is the common portion, is displayed. As a result, images are displayed in a manner easy to be understood in conformity with the intention of the operator, and convenience can be further improved at search for a plurality of targets.

Also, particularly in this embodiment, correlation information associating the label image data of the RFID label T with the tag ID of the corresponding RFID circuit element To is created in advance at production of a RFID label, and the correlation information is accumulated in the database DB of the server 400. When a search is to be made by the apparatus 300 for communicating with a RFID tag, by getting the correlation information accumulated as above from the database DB, the search can be made while the label image data of the RFID label T is displayed on the display portion 313 accordingly.

Also, particularly in this embodiment, the display portion 313 is controlled so that the label image data of the RFID label T is displayed before the readout command ("Query" command") is transmitted by the apparatus 300 for communicating with a RFID tag via the reader antenna 302. As a result, the label image data is displayed before the transmission of the readout command at the search, and the operator can visually and surely recognize the RFID label T corresponding to the target to be searched before it is found.

Also, particularly in this embodiment, during the search by the apparatus 300 for communicating with the RFID tag, the label image data of the RFID label T displayed on the display portion 313 has its display mode changed when a response signal from the corresponding RFID circuit element To is received. As a result, the operator can visually and surely recognize the fact that the search has been successful.

Also, in the apparatus 100 for producing RFID label of this embodiment described above, the information transmission/reception is carried out with the RFID circuit element To via the apparatus antenna 106, and printing is applied on the tag tape 103 by the print head 105 so that the RFID label T with print is produced. At this time, the label image data of the RFID label T including the image data of the print by the print head 105 is output in a form associated with the tag ID of the RFID circuit element To from the apparatus 100 for producing RFID label and stored in the database DB of the server 400. The RFID label T produced as above is provided at an article and the like to be a target.

On the other hand, at search of the article and the like on which the RFID label T is provided as above, information is read out of the RFID circuit element To of the RFID label T provided at the article and the like to be searched by the apparatus 300 for communicating with a RFID tag. Here, in this embodiment, the label image data of the RFLD label T is output and stored in the database DB of the server 400 in advance at the production of the label as above. As a result, at the above search by the apparatus 300 for communicating with a RFID tag, it may be so configured that an access is made to the database DB at start of the information reading and the label image data of the RFID label T corresponding to the RFID circuit element To whose information is to be read out can be displayed. As a result, the operator can search the target while visually recognizing the RFID label corresponding to the target to be searched before it is found. Therefore, identification of the target is facilitated, and convenience can be improved.

Also, particularly in this embodiment, the control circuit 101 of the apparatus 100 for producing RFID label outputs the label image data of the RFID label T and the template image data of the template Sx in association with the tag ID of the RFID circuit element To and stores it in the database DB in the server 400. As a result, at the above-mentioned search of the plurality of RFID circuit elements To in the multi search mode using the apparatus 300 for communicating with a RFID tag, by accessing the database DB, the common image data including the template image data can be displayed.

The present invention is not limited to the above embodiment but is capable of further various variations in a range not departing from its gist and technical idea. The variations will be described below.

In the above, in the case where the tag tape 103 is cut by the cutter 107 so as to produce the RFID label T was described as an example, but not limited to that. That is, if a label mount (so-called die cut label) separated in advance to a predetermined size corresponding to a label is continuously arranged on a tape fed out of a roll, it may be so configured that only the label mount (provided with the accessed RFID circuit element To and on which the corresponding print has been applied) is peeled off the tape discharged from a carry-out exit so as to produce the RFID label T without cutting the tape by the cutter 107, and the present invention can be applied to such the case.

Moreover, in the above, the case where a roll is constituted by winding the tag tape around a reel member, a cartridge 110 in which the roll is contained is attached to a cartridge holder 111, and the tag tape is fed out was described as an example, but not limited to that. For example, a lengthy flat-sheet state or strip-state tape or sheet (including those formed by cutting a tape wound around a roll is fed out and then, cut into an appropriate length) on which at least one RFID circuit element To is arranged is stacked in a predetermined storage portion (flatly laminated in a tray-like container, for example) to be made into a cartridge, and this cartridge is attached to a cartridge holder on the side of the apparatus for producing RFID label so that the tape is transferred and transported from the storage portion and applied with printing and writing so as to produce the RFID label T.

Moreover, there may be a configuration that the lengthy flat-sheet state or strip state tape or sheet is transferred from outside the apparatus for producing RFID label one by one by a predetermined feeder mechanism and supplied into the apparatus for producing RFID label. In this case, too, the same effect is obtained.

Also, in the above, the method in which the print is applied on (a print-receiving tape layer, not shown, provided on) the tag tape 103 (non-bonding type), but the present invention may be applied to a method in which the print may be applied on a cover film separate from the base tape 103 provided with the RFID circuit element To and they are bonded together.

Also, in the above, the example where the RFID tag information is read/written and print is applied to the tag tape 103 during transportation, but not limited to that, the tag tape 103 and the like is stopped at a predetermined position (or may be brought into a state held by a predetermined feeding guide for reading/writing) so that the printing and reading/writing are carried out.

Other than those mentioned above, methods of the embodiments and each variation may be combined as appropriate for use.

Though not specifically exemplified, the present invention should be put into practice with various changes made in a range not departing from the scope of the appended claims.

## Claims

1. An apparatus (300) for communicating with a plurality RFID circuit elements (To) provided on respective RFID labels (T), each RFID circuit element (To) having an IC circuit part (150) storing information and a tag antenna (151) capable of transmission/reception of information, the apparatus (300) comprising:
operation means (321-327, 329) for operating and inputting information to specify at least one of said RFID circuit elements (To);
radio communication means (302) configured to carry out radio communication with any of the plurality of RFID circuit elements (To);
tag information acquisition means (S310-S360, S420, S445) configured to attempt to get information from a specified RFID circuit element (To) via said radio communication means (302) by means of specifying identification information of said corresponding RFID circuit element (To) on the basis of the operation input of said operation means (321-327, 329); and
image display means (313); wherein
the apparatus (300) is for communicating with the RFID circuit elements (To) of RFID labels (T) having respective printed images thereon;
the apparatus (300) further comprises image related information acquisition means (S205) configured to get image related information from a database (DB) in which correlation information associating the printed image of said RFID label (T) with said identification information of said corresponding RFID circuit element (To) is stored and held; and
the image display means (313) is configured to display at least a part of the printed image of said RFID label (T) corresponding to said RFID circuit element (To), which is a target of said information acquisition, before said information acquisition by said tag information acquisition means (S310-5360, S420-S445) is completed by means of specifying said identification information, said image display means (313) displaying said at least a part of the printed image of said RFID label (T) on the basis of said image related information gotten by said image related information acquisition means (S205).

2. The apparatus (300) for communicating with an RFID tag according to claim 1, **characterized in that**:
said image display means is display means (313) capable of graphic display; and
said tag information acquisition means (S310-S360, S420-S445) includes:
inquiry signal transmission means (S320, S425) configured to transmit an inquiry signal demanding a response from the specified RFID circuit element (To) via said radio communication means (302); and
response signal receiving means (S330, S430) configured to receive a response signal from said RFID circuit element (To) responding to said inquiry signal via said radio communication means (302); and wherein
the apparatus (300) further comprises:
display control means (S305, S380, S407, S460) configured to control said image display means (313) so that said printed image of said RFID label (T) is displayed before said inquiry signal transmission means (S320, S425) transmits said inquiry signal via said radio communication means (302).

3. The apparatus (300) for communicating with an RFID tag according to claim 1, **characterized in that**:
said image display means (313) displays said printed image including fixed print region image data of a fixed print region set according to a usage or attribute of an RFID label (T) at production of the RFID label (T) and fixedly available to a producer of said RFID label (T).

4. The apparatus (300) for communicating with an RFID tag according to claim 3, **characterized in that**:
said image display means (313) displays common image common to a plurality of said printed images respectively corresponding to said plurality of RFID circuit elements (To), said printed image including said fixed print region data, in the case that information for specifying a plurality of RFID circuit elements (To) is operated and input by said operation means (321-327, 329).

5. The apparatus (300) for communicating with an RFID tag according to claim 2, **characterized in that**:
in the case that said response signal receiving means (S330, S430) receives said response signal via said radio communication means (302), said display control means (S305, S380, S407, S460) controls said image display means (313) so that a display mode of said printed image of said RFID label (T) being displayed is changed according to said receiving.

6. An apparatus (100) for producing RFID labels comprising:
feeding means (108) configured to feed a tag medium (103) on which is arranged an RFID circuit element (To) provided with an IC circuit part (150) storing information and a tag antenna (151) for transmission/reception of information;
an apparatus antenna (106) configured to carry out information transmission/reception with said RFID circuit element (To) via radio communication, and
printing means (105) configured to produce an RFID label (T) by applying a printed image on said tag medium (103) or a print-receiving medium to be bonded to said tag medium (103); **characterized by**:
first image data output means (S160) configured to output, for said RFID label (T), the printed image printed by said printing means (105) in association with identification information of said RFID circuit element (To) corresponding to said RFID label (T) to a database (DB) in which correlation information associating the printed image of said RFID label (T) with said identification information of said corresponding RFID circuit element (To) is stored and held.

7. The apparatus (100) for producing RFID labels according to claim 6, **characterized in that**:
said first image data output means (S160) is configured to output to said database (DB) said printed image and a fixed print.set according to usage or attribute of said RFID label (T) at production of an RFID label (T) and fixedly available to a producer of said RFID label (T) in association with said identification information of said RFID circuit element (To).

8. A label image management system (1) comprising:
an apparatus (100) for producing RFID labels according to claim 6 or 7; and
an apparatus (300) for communicating with an RFID tag according to any one of claims 1 to 5.

9. The label image management system (1) according to claim 8, further comprising said database (DB) configured to store and hold printed images of said RFID labels (T) and a fixed print region set according to usage or attribute of said RFID label (T) at production of the RFID label (T) and fixedly available to a producer of the RFID label (T) in association with identification information of said RFID circuit element (To) corresponding to said RFID label (T).

10. The label image management system (1) according to claim 9, further comprising an RFID label editing device (200) capable of editing print contents of said printing means (105), connected to said apparatus (100) for producing RFID labels,
said RFID label editing device (200) including second image data output means (S90) configured to output edited print image data and fixed print region image data in association with said identification information of said RFID circuit element (To).

## Patentansprüche

1. Eine Vorrichtung (300) zum Kommunizieren mit einer Mehrzahl von RFID-Schaltkreiselementen (To), die auf entsprechenden RFID-Etiketten (T) vorgesehen sind, wobei jedes RFID-Schaltkreiselement (To) einen IC-Schaltkreisteil (150) hat, der Information speichert und eine Kennzeichenantenne (151), die zum Übermitteln/Empfangen von Information in der Lage ist, wobei die Vorrichtung (300) aufweist:
Betriebsmittel (321-327, 329) zum Betrieb und zum Eingeben von Information, um mindestens eines der RFID-Schaltkreiselemente (To) zu spezifizieren;
Funkkommunikationsmittel (302), die konfiguriert sind, um Funkkommunikation mit einem der Mehrzahl von RFID-Schaltkreiselementen (To) auszuführen;
Kennzeicheninformationsbeschaffungsmittel (S310-S360, S420, S445), die konfiguriert sind, zu versuchen, Information von einem spezifizierten RFID-Schaltkreiselement (To) zu erhalten, über die Funkkommunikationsmittel (302) durch Spezifizieren von Identifikationsinformation von dem entsprechenden RFID-Schaltkreiselement (To) auf der Grundlage der Betriebseingabe der Betriebsmittel (321-327, 329); und
Bildanzeigemittel (313), wobei
die Vorrichtung (300) zur Kommunikation mit den RFID-Schaltkreiselementen (To) der RFID-Etiketten (T) ist, die entsprechende gedruckte Bilder darauf haben;
wobei die Vorrichtung (300) weiterhin ein bildbezogenes Informationsbeschaffungsmittel (S205) aufweist, das konfiguriert ist, bildbezogene Information von einer Datenbank (DB) zu bekommen, in der Korrelationsinformation gespeichert und gehalten ist, die das gedruckte Bild der RFID-Etikette (T) mit der Identifikationsinformation von dem entsprechenden RFID-Schaltkreiselement (To) assoziiert; und
das Bildanzeigemittel (313) konfiguriert ist, zumindest einen Teil des gedruckten Bilds der RFID-Etikette (T) anzuzeigen, entsprechend des RFID-Schaltkreiselements (To), was ein Ziel der Informationsbeschaffung ist, bevor die Informationsbeschaffung durch das Kennzeicheninformationsbeschaffungsmittel (S313-S360, S420-S445) durch das Spezifizieren der Identifikationsinformation beendet ist, wobei das Bildanzeigemittel (313) mindestens einen Teil des gedruckten Bilds der RFID-Etikette (T) anzeigt, auf der Grundlage von der bildbezogenen Information, die durch das bildbezogene Informationsbeschaffungsmittel (S205) erhalten wird.

2. Die Vorrichtung (300) zum Kommunizieren mit einer RFID-Kennzeichnung gemäß Anspruch 1, **dadurch gekennzeichnet, dass**
das Bildanzeigemittel ein Anzeigemittel (313) ist, das zur Grafikanzeige in der Lage ist; und
das Kennzeicheninformationsbeschaffungsmittel (S310-S360, S420-S445) umfasst:
ein Abfragesignalübermittelungsmittel (S320, S425), das ausgebildet ist, um ein Abfragesignal zu übermitteln, das über das Funkkommunikationsmittel (302) eine Antwort von dem spezifizierten RFID-Schaltkreiselement (To) fordert; und
ein Antwortsignalempfangsmittel (S330, S430), das ausgebildet ist, um ein Antwortsignal von dem RFID-Schaltkreiselement (To) zu empfangen, das über das Funkkommunikationsmittel (302) auf das Abfragesignal antwortet; und wobei
die Vorrichtung (300) weiterhin aufweist:
ein Anzeigesteuermittel (S305, S380, S407, S460), das ausgebildet ist, um das Bildanzeigemittel (313) zu steuern, so dass das gedruckte Bild der RFID-Etikette (T) angezeigt wird, bevor das Abfragesignalübermittlungsmittel (S320, S425) das Abfragesignal über das Funkkommunikationsmittel (302) überträgt.

3. Die Vorrichtung (300) zum Kommunizieren mit einem RFID-Kennzeichen gemäß Anspruch 1, **dadurch gekennzeichnet, dass**:
das Bildanzeigemittel (313) das gedruckte Bild anzeigt, umfassend feste Druckbereichbilddaten eines festen Druckbereichs, der bei der Produktion der RFID-Etikette (T) gemäß einer Verwendung oder eines Attributs einer RFID-Etikette (T) gesetzt wurde und für einen Hersteller der RFID-Etiketten (T) fertig erhältlich ist.

4. Die Vorrichtung (300) zum Kommunizieren mit einem RFID-Kennzeichen gemäß Anspruch 3, **dadurch gekennzeichnet, dass**:
das Bildanzeigemittel (313) ein gemeinsames Bild anzeigt, das mit einer Mehrzahl von den gedruckten Bildern gemeinsam ist, jeweils entsprechend der Mehrzahl von RFID-Schaltkreiselementen (To), wobei das gedruckte Bild die festen Druckbereichsdaten umfasst, für den Fall, dass Information zum Spezifizieren einer Mehrzahl von RFID-Schaltkreiselementen (To) angewendet wird und eingegeben wird durch das Betriebsmittel (321-327, 329).

5. Die Vorrichtung (300) zum Kommunizieren mit einem RFID-Kennzeichen, **dadurch gekennzeichnet, dass**:
für den Fall, dass das Antwortsignalempfangsmittel (S330, S430) das Antwortsignal über das Funkkommunikationsmittel (302) empfängt, steuert das Anzeigesteuermittel (S305, S380, S407, S460) das Bildanzeigemittel (313) derart, dass ein Anzeigemodus des gedruckten Bilds der RFID-Etikette (T), die angezeigt wird, gemäß des Empfangs geändert wird.

6. Eine Vorrichtung (100) zum Produzieren von RFID-Etiketten, die aufweist:
ein Zuführmittel (108), das ausgebildet ist ein Kennzeichenmedium (103) zuzuführen, auf dem ein RFID-Schaltkreiselement (To) angeordnet ist, das mit einem IC-Schaltkreisteil (150) versehen ist, das Information speichert und einer Kennzeichenantenne (151) zur Übermittlung/Empfang von Information;
eine Vorrichtungsantenne (106), die ausgebildet ist über Funkkommunikation, Informations- Übermittlung/Empfang mit dem RFID-Schaltkreiselement (To) auszuführen, und
ein Druckmittel (105), das ausgebildet ist, eine RFID-Etikette (T) zu produzieren, durch Bereitstellen eines gedruckten Bilds auf das Kennzeichenmedium (103) oder ein Druckempfangsmedium, das mit dem Kennzeichenmedium (103) verbunden werden soll; **gekennzeichnet durch**:
ein erstes Bilddatenausgabemittel (S160), das ausgebildet ist, für die RFID-Etikette (T), das gedruckte Bild, das **durch** das Druckmittel (105) gedruckt wird, in Verbindung mit Identifikationsinformation des RFID-Schaltkreiselements (To), entsprechend der RFID-Etikette (T) in eine Datenbank (DB) auszugeben, in der Korrelationsinformation, die das gedruckte Bild der RFID-Etikette (T) mit der Identifikationsinformation des entsprechenden RFID-Schaltkreiselements verbindet, gespeichert und gehalten ist.

7. Die Vorrichtung (100) zum Produzieren von RFID-Etiketten gemäß Anspruch 6, **dadurch gekennzeichnet, dass**:
das erste Bilddatenausgabemittel (S160) ausgebildet ist, das gedruckte Bild in die Datenbank (DB) auszugeben und einen fertigen Druck, der bei der Produktion einer RFID-Etikette (T) gemäß einer Verwendung oder eines Attributs von der RFID-Etikette (T) gesetzt ist und für einen Hersteller von der RFID-Etikette (T) fertig erhältlich ist in Verbindung mit der Identifikationsinformation des RFID-Schaltkreiselements (To).

8. Ein Etikettenbildmanagementsystem (1), das aufweist:
eine Vorrichtung (100) zum Produzieren von RFID-Etiketten gemäß Anspruch 6 oder 7; und
eine Vorrichtung (300) zum Kommunizieren mit einem RFID-Kennzeichen gemäß einem der Ansprüche 1 bis 5.

9. Das Etikettenbildmanagementsystem (1) gemäß Anspruch 8, das weiter die Datenbank (DB) aufweist, die ausgebildet ist, gedruckte Bilder der RFID-Etiketten (T) zu speichern und zu halten und einen festen Druckbereich, der gemäß Verwendung oder eines Attributs der RFID-Etikette (T) gesetzt ist bei der Produktion der RFID-Etikette (T) gesetzt ist und für einen Hersteller von RFID-Etiketten (T) fertig verfügbar ist, in Verbindung mit Identifikationsinformation des RFID-Schaltkreiselements (To), entsprechend der RFID-Etikette (T).

10. Das Etikettenbildmanagementsystem (1) gemäß Anspruch 9, das weiterhin aufweist: eine RFID-Etikettenbearbeitungsvorrichtung (200), die Druckinhalte auf dem Druckmittel (105) bearbeiten kann, die mit der Vorrichtung (100) zum Produzieren von RFID-Etiketten verbunden ist,
wobei die RFID-Etikettenbearbeitungsvorrichtung (200) ein zweites Bilddatenausgabemittel (S90) umfasst, das ausgebildet ist, bearbeitete Druckbilddaten zu bearbeiten und feste Druckbereichsbilddaten in Verbindung mit der Identifikationsinformation des RFID-Schaltkreiselements (To).

## Revendications

1. Appareil (300) permettant d'établir une communication avec une pluralité d'éléments de circuit RFID (To) prévus sur des étiquettes RFID (T) respectives, chaque élément de circuit RFID (To) ayant une partie (150) de circuit intégré CI stockant des informations et une antenne d'étiquette (151) capable de transmettre/recevoir des informations, l'appareil (300) comprenant :
un moyen d'exploitation (321-327, 329) pour exploiter et introduire des informations afin de spécifier au moins l'un desdits éléments de circuit RFID (To) ;
un moyen de radiocommunication (302) configuré pour effectuer une radiocommunication avec un élément quelconque de la pluralité d'éléments de circuit RFID (To) ;
un moyen d'acquisition d'informations d'étiquette (S310-S360, S420, S445) configuré pour tenter d'obtenir des informations à partir d'un élément de circuit RFID (To) spécifié via ledit moyen de radiocommunication (302) au moyen d'informations d'identification de spécification dudit élément de circuit RFID (To) correspondant sur la base de l'entrée d'exploitation dudit moyen d'exploitation (321-327, 329) ; et
un moyen d'affichage d'image (313) ; dans lequel
l'appareil (300) est destiné à établir une communication avec les éléments de circuit RFID (To) des étiquettes RFID (T) sur lesquelles se trouvent des images imprimées respectives ;
l'appareil (300) comprend en outre un moyen (S205) d'acquisition d'informations relatives aux images configuré pour obtenir des informations relatives aux images à partir d'une base de données (DB) dans laquelle des informations de corrélation associant l'image imprimée de ladite étiquette RFID (T) auxdites informations d'identification dudit élément de circuit RFID (To) correspondant sont stockées et maintenues ; et
le moyen d'affichage d'image (313) est configuré pour afficher au moins une partie de l'image imprimée de ladite étiquette RFID (T) correspondant audit élément de circuit RFID (To), qui est une cible desdites informations d'acquisition, avant que ladite acquisition d'informations par ledit moyen d'acquisition d'informations d'étiquette (S310-S360, S420-S445) ne soit effectuée par spécification desdites informations d'identification, ledit moyen d'affichage d'image (313) affichant ladite au moins une partie de l'image imprimée de ladite étiquette RFID (T) sur la base desdites informations relatives aux images obtenues par ledit moyen (S205) d'acquisition d'informations relatives aux images.

2. Appareil (300) permettant d'établir une communication avec une étiquette RFID selon la revendication 1, **caractérisé en ce que** :
ledit moyen d'affichage d'image est un moyen d'affichage (313) capable d'effectuer un affichage graphique ; et
ledit moyen d'acquisition d'informations d'étiquette (S310-S360, S420-S445) comporte :
un moyen de transmission de signaux de demande (S320, S425) configuré pour transmettre un signal de demande demandant une réponse à partir de l'élément de circuit RFID (To) spécifié via ledit moyen de radiocommunication (302) ; et
un moyen de réception de signal de réponse (S330, S430) configuré pour recevoir un signal de réponse à partir dudit élément de circuit RFID (To) répondant audit signal de demande via ledit moyen de radiocommunication (302) ; et dans lequel
l'appareil (300) comprend en outre :
un moyen de commande d'affichage (S305, S380, S407, S460) configuré pour commander ledit moyen d'affichage d'image (313) de sorte que ladite image imprimée de ladite étiquette RFID (T) soit affichée avant que ledit moyen de transmission de signaux de demande (S320, S425) ne transmette ledit signal de demande via ledit moyen de radiocommunication (302).

3. Appareil (300) permettant d'établir une communication avec une étiquette RFID selon la revendication 1, **caractérisé en ce que** :
ledit moyen d'affichage d'image (313) affiche ladite image imprimée comportant des données d'image de zone d'impression fixe d'une zone d'impression fixe définie selon une utilisation ou un attribut d'une étiquette RFID (T) lors de sa production et disponible de manière fixe à un producteur de ladite étiquette RFID (T).

4. Appareil (300) permettant d'établir une communication avec une étiquette RFID selon la revendication 3, **caractérisé en ce que** :
ledit moyen d'affichage d'image (313) affiche une image commune à une pluralité desdites images imprimées correspondant respectivement à ladite pluralité d'éléments de circuit RFID (To), ladite image imprimée comportant lesdites données de zone d'impression fixe, dans le cas où des informations spécifiant une pluralité d'éléments de circuit RFID (To) sont exploitées et introduites par ledit moyen d'exploitation (321-327, 329).

5. Appareil (300) permettant d'établir une communication avec une étiquette RFID selon la revendication 2, **caractérisé en ce que** :
dans le cas où ledit moyen de réception de signal de réponse (S330, S430) reçoit ledit signal de réponse via ledit moyen de radiocommunication (302), ledit moyen de commande d'affichage (S305, S380, S407, S460) commande ledit moyen d'affichage d'image (313) de sorte qu'un mode d'affichage de ladite image imprimée de ladite étiquette RFID (T) étant affichée soit modifiée selon ladite réception.

6. Appareil (100) destiné à produire des étiquettes RFID comprenant :
un moyen d'alimentation (108) configuré pour fournir un support d'étiquette (103) sur lequel est agencé un élément de circuit RFID (To) pourvu d'une partie de circuit intégré CI (150) stockant des informations et une antenne d'étiquette (151) pour la transmission/réception d'informations ;
une antenne d'appareil (106) configurée pour effectuer la transmission/réception d'informations avec ledit élément de circuit RFID (To) via radiocommunication, et
un moyen d'impression (105) configuré pour produire une étiquette RFID (T) en appliquant une image imprimée sur ledit support d'étiquette (103) ou un support de réception d'impression à relier audit support d'étiquette (103) ; **caractérisé par** :
un premier moyen de sortie de données d'image (S160) configuré pour délivrer en sortie, pour ladite étiquette RFID (T), l'image imprimée par ledit moyen d'impression (105) en association avec des informations d'identification dudit élément de circuit RFID (To) correspondant à ladite étiquette RFID (T) à une base de données (DB) dans laquelle les informations de corrélation associant l'image imprimée de ladite étiquette RFID (T) auxdites informations d'identification dudit élément de circuit RFID (To) correspondant sont stockées et maintenues.

7. Appareil (100) destiné à produire des étiquettes RFID selon la revendication 6, **caractérisé en ce que** :
ledit premier moyen de sortie de données d'image (S160) est configuré pour délivrer en sortie à ladite base de données (DB) ladite image imprimée et une zone d'impression fixe définie selon une utilisation ou un attribut d'une étiquette RFID (T) lors de sa production et disponible de manière fixe à un producteur de ladite étiquette RFID (T) en association avec lesdites informations d'identification dudit élément de circuit RFID (To).

8. système (1) de gestion d'image d'étiquette comprenant :
un appareil (100) destiné à produire des étiquettes RFID selon la revendication 6 ou 7 ; et
un appareil (300) permettant d'établir une communication avec une étiquette RFID selon l'une quelconque des revendications 1 à 5.

9. Système (1) de gestion d'image d'étiquette selon la revendication 8, comprenant en outre ladite base de données (DB) configurée pour stocker et maintenir des images imprimées desdites étiquettes RFID (T) et une zone d'impression fixe définie selon une utilisation ou un attribut de ladite étiquette RFID (T) lors de sa production et disponible de manière fixe à un producteur de l'étiquette RFID (T) en association avec les informations d'identification dudit élément de circuit RFID (To) correspondant à ladite étiquette RFID (T).

10. Système (1) de gestion d'image d'étiquette selon la revendication 9, comprenant en outre un dispositif (200) de modification d'étiquette RFID capable de modifier le contenu d'impression dudit moyen d'impression (105), connecté audit appareil (100) pour produire des étiquettes RFID,
ledit dispositif (200) de modification d'étiquette RFID comportant un deuxième moyen de sortie de données d'image (S90) configuré pour délivrer en sortie des données d'image d'impression modifiées et des données d'image de zone d'impression fixe en association avec lesdites informations d'identification dudit élément de circuit RFID (To) .
